# EUROPEAN PATENT APPLICATION

(11) **EP 4 509 571 A1**
(43) Date of publication of application: **19.02.2025**
(21) Application number: 23803586.9
(22) Date of filing: 10.05.2023
(51) Int. Cl.: C09J 4/00, B32B 27/00, C09J 11/04, C09J 11/06

(54) **ADHESIVE SET, BONDED BODY AND METHOD FOR PRODUCING SAME**

(30) Priority: 13.05.2022 JP 2022079726
(71) Applicant: Resonac Corporation, Tokyo 105-7325 (JP)
(72) Inventor: TANAKA Toru, Tokyo 105-7325 (JP); KAWAMORI Takashi, Tokyo 105-7325 (JP); MATSUNAGA Masahiro, Tokyo 105-7325 (JP)
(74) Representative: Berggren Oy
(86) International application number: PCT/JP2023/017608
(87) International publication number: WO 2023/219111

(57) **Abstract**

An adhesive set is disclosed. The adhesive set includes a main agent containing a decomplexing agent and an initiator containing an organoborane complex and (meth)acrylamide having a heterocyclic ring. At least one of the main agent and the initiator further contains a compound having a radically polymerizable group. At least one of the main agent and the initiator further contains at least one selected from the group consisting of a metal halide salt and a compound having a thiocarbonyl thio structure.

## Description

### Technical Field

The present disclosure relates to an adhesive set, a bonded body, and a method for producing the same.

### Background Art

An adhesive composition containing an organoborane complex has been disclosed as an adhesive between plastics such as polyethylene and polypropylene (for example, Patent Literature 1). The organoborane complex is decomplexed by mixing with a decomplexing agent to form an organoborane. The organoborane acts as an initiator that generates radicals by reacting with oxygen. The borinate radical generated here acts on generation of a dormant species in atom transfer radical polymerization (ATRP) that sustains a growth reaction including surface grafting while suppressing chain transfer or termination reaction of a compound having a radically polymerizable group.

### Citation List

### Patent Literature

Patent Literature 1: JP 2005-514489 A

### Summary of Invention

### Technical Problem

Incidentally, for adhesive compositions, it is required that a time until sufficient adhesive strength is obtained (curing time) be short from the viewpoint of process compatibility (handleability). However, in conventional adhesive compositions containing an organoborane complex, the curing time is extremely long, and there is still room for improvement.

It is therefore a main object of the present disclosure to provide an adhesive set that allows for preparation of an adhesive composition capable of sufficiently shortening the curing time.

### Solution to Problem

The inventors of the present disclosure have studied to solve the above problem, and found that the curing time of an adhesive composition can be sufficiently shortened by using (meth)acrylamide having a heterocyclic ring, thereby completing the invention of the present disclosure.

That is, the present disclosure provides an adhesive set according to the following [1] to [3], a bonded body according to the following [4], and a method for producing the bonded body according to the following [5].
[1] An adhesive set including: a main agent containing a decomplexing agent; and an initiator containing an organoborane complex and (meth)acrylamide having a heterocyclic ring, in which at least one of the main agent and the initiator further contains a compound having a radically polymerizable group, and at least one of the main agent and the initiator further contains at least one selected from the group consisting of a metal halide salt and a compound having a thiocarbonyl thio structure.
[2] The adhesive set according to [1], in which the (meth)acrylamide having a heterocyclic ring is a compound represented by Formula (1). 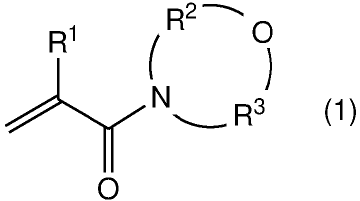
   In Formula (1), R¹ represents a hydrogen atom or a methyl group.
   R² and R³ each independently represent an alkylene group.
[3] The adhesive set according to [1] or [2], in which the main agent further contains a compound having a radically polymerizable group.
[4] A bonded body including: a first adherend; a second adherend; and an adhesive layer bonding the first adherend and the second adherend to each other, in which the adhesive layer contains a cured product of an adhesive composition containing the main agent and the initiator in the adhesive set according to any one of [1] to [3].
[5] A method for producing the bonded body according to [4], the method including: pasting the first adherend and the second adherend together with an adhesive composition containing the main agent and the initiator interposed between the first adherend and the second adherend.

The adhesive set described above allows for preparation of an adhesive composition capable of sufficiently shortening the curing time. The reason why such an effect is developed is not necessarily clear, but the present inventors infer that this is because, for example, moderate interaction acts between the p orbital of the organoborane of an organoborane complex and (meth)acrylamide having a heterocyclic ring, and the metal of a metal halide salt forms a complex with the (meth)acrylamide having a heterocyclic ring to be stabilized, thereby improving sustainability of growth reaction of a compound having a radically polymerizable group.

### Advantageous Effects of Invention

According to the present disclosure, there is provided an adhesive set that allows for preparation of an adhesive composition capable of sufficiently shortening the curing time. Furthermore, according to the present disclosure, there are provided a bonded body using such an adhesive set and a method for producing the same.

### Brief Description of Drawings

FIG. 1 is a graph showing changes in shear strength with respect to curing time in Example 1-1 and Comparative Examples 1-1 to 1-3.
FIG. 2 is a graph showing changes in shear strength with respect to curing time in Example 2-1 and Comparative Examples 2-1 to 2-3.

### Description of Embodiments

Hereinafter, embodiments of the present disclosure will be described. However, the present disclosure is not limited to the following embodiments.

The same applies to numerical values and ranges thereof in the present disclosure, and the present disclosure is not limited thereto. In the present description, a numerical range expressed by using "to" indicates a range including numerical values described before and after "to" as a minimum value and a maximum value, respectively. In the numerical ranges described in a stepwise manner in the present description, the upper limit value or the lower limit value described in one numerical range may be replaced with the upper limit value or the lower limit value of another numerical range described in a stepwise manner. In addition, in the numerical range described in the present description, the upper limit value or the lower limit value of the numerical range may be replaced with a value shown in the examples.

In the present description, (meth)acrylamide means acrylamide or methacrylamide corresponding thereto. (Meth)acrylate means an acrylate or a methacrylate corresponding thereto. The same applies to other analogous expressions such as a (meth)acryloyl group and a (meth)acrylic copolymer. In addition, the materials exemplified below may be used singly, or in combination of two or more kinds thereof unless otherwise specified. When a plurality of substances corresponding to each component are present in the composition, the content of each component in the composition means the total amount of the plurality of substances present in the composition unless otherwise specified.

### [Adhesive Set]

An adhesive set according to one embodiment includes a main agent containing a decomplexing agent and an initiator containing an organoborane complex and (meth)acrylamide having a heterocyclic ring. In the adhesive set of the present embodiment, by mixing the main agent and the initiator, an adhesive composition containing the main agent and the initiator can be obtained.

The main agent contains a decomplexing agent. The initiator contains an organoborane complex and (meth)acrylamide having a heterocyclic ring. At least one of the main agent and the initiator further contains a compound having a radically polymerizable group. At least one of the main agent and the initiator further contains at least one selected from the group consisting of a metal halide salt and a compound having a thiocarbonyl thio structure. At least one of the main agent and the initiator may further contain any of a filler, a plasticizer, or the like. Each component will be described below.

### (Organoborane Complex)

The initiator contains an organoborane complex. The organoborane complex means an organoborane-Lewis base complex obtained by coordinating a Lewis base to an organoborane to form a complex. The organoborane-Lewis base complex is a compound that reacts with a decomplexing agent described later to form an organoborane. Since the organoborane causes radical cleavage in the presence of oxygen to generate a borinate radical or the like, the organoborane can act as an initiator of living radical polymerization. The organoborane may be, for example, an alkyl borane (BR₃, R: alkyl group). The Lewis base may be, for example, an amine. The amine may be, for example, a compound having a plurality of amino groups or a compound having at least an amino group constituting the amine and a group (for example, an alkoxy group or the like) containing an atom (for example, an oxygen atom or the like) capable of coordinating to boron other than the nitrogen atom of the amino group. Since these compounds act as a multidentate ligand for organoboranes, they can be referred to as multidentate amines.

The organoborane complex may be an alkylborane-amine complex, and may be an alkylborane-multidentate amine complex. Examples of the organoborane complex include a triethylborane-1,3-diaminopropane complex, a triethylborane-diethylene triamine complex, a tri-n-butylborane-3-methoxy-1-propylamine complex, a tri-n-butylborane-1,3-diaminopropane complex, a triisobutylborane-1,3-diaminopropane complex, a triethylborane-1,6-diaminohexane complex, a triisobutylborane-1,3-diaminopropane complex, and a triisobutylborane-1,6-diaminohexane complex. These may be used singly, or in combination of two or more kinds thereof. Among them, the organoborane complex may be a triethylborane-1,3-diaminopropane complex or a tri-n-butylborane-3-methoxy-1-propylamine complex. As the organoborane complex, a commercially available product or a synthesized product may be used.

The content of the organoborane complex may be 0.1% by mass or more, 1% by mass or more, 3% by mass or more, or 5% by mass or more based on the total amount of the initiator from the viewpoint of developing adhesive strength. The content of the organoborane complex may be 30% by mass or less, 20% by mass or less, 15% by mass or less, or 10% by mass or less based on the total amount of the initiator from the viewpoint of storage stability.

The content of the organoborane complex may be 0.01% by mass or more, 0.05% by mass or more, 0.1% by mass or more, or 0.2% by mass or more based on the total amount of the main agent and the initiator from the viewpoint of developing adhesive strength. The content of the organoborane complex may be 10% by mass or less, 5% by mass or less, 3% by mass or less, or 1% by mass or less based on the total amount of the main agent and the initiator from the viewpoint of toughness of an adhesive layer.

The content of the organoborane complex may be 0.01 mol% or more, 0.05 mol% or more, 0.1 mol% or more, or 0.5 mol% or more based on the total amount of the compound having a radically polymerizable group from the viewpoint of developing adhesive strength. The content of the organoborane complex may be 10 mol% or less, 5 mol% or less, 2 mol% or less, or 1 mol% or less based on the total amount of the compound having a radically polymerizable group from the viewpoint of toughness of an adhesive layer.

### ((Meth)acrylamide Having Heterocyclic Ring)

The initiator contains (meth)acrylamide having a heterocyclic ring. The (meth)acrylamide having a heterocyclic ring may act on stabilization of the organoborane complex, and may be a stabilizer that may contribute to stabilization of the adhesive set.

The (meth)acrylamide having a heterocyclic ring is not particularly limited as long as it has a heterocyclic ring, but may be (meth)acrylamide having a heterocyclic ring containing a nitrogen atom, and may be (meth)acrylamide in which the nitrogen atom in the heterocyclic ring is a nitrogen atom of (meth)acrylamide. The (meth)acrylamide having a heterocyclic ring may be an acrylamide having a heterocyclic ring.

In the (meth)acrylamide having a heterocyclic ring, the heterocyclic ring may be a four or more-membered ring or a five or more-membered ring, and may be an eight or less-membered ring or a seven or less-membered ring. In the (meth)acrylamide having a heterocyclic ring, the heterocyclic ring may be, for example, a six-membered ring.

The (meth)acrylamide having a heterocyclic ring may be, for example, a compound represented by Formula (1).

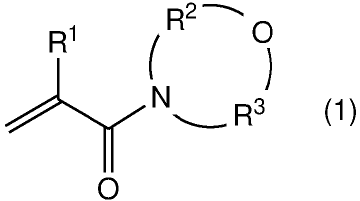

R¹ represents a hydrogen atom or a methyl group. R¹ may be a hydrogen atom.

R² and R³ each independently represent an alkylene group. The number of carbon atoms of the alkylene group may be 1 to 20, 1 to 10, 1 to 6, or 1 to 3. The alkylene group may be either a linear alkylene group or a branched alkylene group. The number of carbon atoms of the linear alkylene group is usually 1 to 20, and may be 1 to 10, 1 to 6, or 1 to 3. The number of carbon atoms of the branched alkylene group is usually 3 to 20, and may be 3 to 10 or 3 to 6.

Examples of the linear alkylene group include a methylene group, an ethylene group, a propylene group, a butylene group, a pentylene group, and a hexylene group. Examples of the branched alkylene group include an isopropylene group, an isobutylene group, and a dimethylpropylene group. Among them, the alkylene group may be an ethylene group.

Some of the hydrogen atoms of the alkylene group may be substituted by a substituent. In the present description, the substituent means a group that compounds can generally have in the field of organic chemistry. Specific examples of the substituent include a halogen atom (fluorine atom, chlorine atom, bromine atom, and iodine atom), a cyano group, an alkyl group having 1 to 10 carbon atoms, an aryl group having 6 to 10 carbon atoms, an alkoxy group having 1 to 10 carbon atoms, and an amino group.

The heterocyclic ring containing a nitrogen atom may be, for example, a morpholine ring. That is, the (meth)acrylamide having a heterocyclic ring may be 4-(meth)acryloylmorpholine, and may be 4-acryloylmorpholine (ACMO).

Since (meth)acrylamide having a heterocyclic ring has a radically polymerizable group, it can also act as a compound having a radically polymerizable group ((meth)acrylamide derivative) described later.

The content of the (meth)acrylamide having a heterocyclic ring (stabilizer) may be 0.1% by mass or more, 1% by mass or more, 3% by mass or more, or 5% by mass or more based on the total amount of the initiator from the viewpoint of shortening the curing time of the adhesive composition. The content of the (meth)acrylamide having a heterocyclic ring may be 30% by mass or less, 25% by mass or less, 20% by mass or less, or 15% by mass or less based on the total amount of the initiator.

The content of the (meth)acrylamide having a heterocyclic ring (stabilizer) may be 0.01% by mass or more, 0.05% by mass or more, 0.1% by mass or more, or 0.5% by mass or more based on the total amount of the main agent and the initiator from the viewpoint of shortening the curing time of the adhesive composition. The content of the (meth)acrylamide having a heterocyclic ring may be 10% by mass or less, 7% by mass or less, 5% by mass or less, or 3% by mass or less based on the total amount of the main agent and the initiator from the viewpoint of toughness of an adhesive layer.

The content of the (meth)acrylamide having a heterocyclic ring (stabilizer) may be 0.01 mol% or more, 0.05 mol% or more, 0.1 mol% or more, or 0.5 mol% or more based on the total amount of the compound having a radically polymerizable group from the viewpoint of shortening the curing time of the adhesive composition. The content of the (meth)acrylamide having a heterocyclic ring may be 10 mol% or less, 7 mol% or less, 5 mol% or less, or 3 mol% or less based on the total amount of the compound having a radically polymerizable group from the viewpoint of toughness of an adhesive layer.

### (Decomplexing Agent)

The main agent contains a decomplexing agent. The decomplexing agent is a compound capable of dissociating a Lewis base from an organoborane complex (organoborane-Lewis base complex) to generate an organoborane. Thus, by mixing and reacting the organoborane complex contained in the initiator and the decomplexing agent contained in the main agent, it is possible to generate an organoborane that can be an initiator of living radical polymerization.

Examples of the decomplexing agent include an acid, an acid anhydride, an aldehyde, and a β-ketone compound. These may be used singly, or in combination of two or more kinds thereof. Examples of the acid include Lewis acids such as SnCl₄ and TiCl₄ and Brønsted acids such as aliphatic carboxylic acids and aromatic carboxylic acids. Examples of the acid anhydride include acetic anhydride, propionic anhydride, succinic anhydride, maleic anhydride, and phthalic anhydride. Examples of the aldehyde include benzaldehyde, o-, m-, and p-nitrobenzaldehyde. Examples of the β-ketone compound include methyl acetoacetate, ethyl acetoacetate, t-butyl acetoacetate, and 2-methacryloyloxyethyl acetoacetate. Among them, the decomplexing agent may be an acid anhydride from the viewpoints of the reactivity in decomplexing of the organoborane complex and storage stability of the main agent, and the decomplexing agent may be succinic anhydride or maleic anhydride, and may be maleic anhydride, from the viewpoint of suppressing the blending mass of the decomplexing agent.

The content of the decomplexing agent may be 0.01% by mass or more, 0.1% by mass or more, 0.2% by mass or more, or 0.3% by mass or more based on the total amount of the main agent from the viewpoint of shortening the curing time of the adhesive composition. The content of the decomplexing agent may be 10% by mass or less, 5% by mass or less, 3% by mass or less, 2% by mass or less, or 1% by mass or less based on the total amount of the main agent from the viewpoint of ensuring working time from application of the adhesive composition to an adherend to pasting the adherend and another adherend together.

The content of the decomplexing agent may be 0.01% by mass or more, 0.1% by mass or more, 0.2% by mass or more, or 0.3% by mass or more based on the total amount of the main agent and the initiator from the viewpoint of shortening the curing time of the adhesive composition. The content of the decomplexing agent may be 10% by mass or less, 7% by mass or less, 5% by mass or less, 3% by mass or less, or 1% by mass or less based on the total amount of the main agent and the initiator from the viewpoint of ensuring working time from application of the adhesive composition to an adherend to pasting the adherend and another adherend together.

The molar amount ratio of the decomplexing agent to the organoborane complex (molar amount of decomplexing agent/molar amount of organoborane complex) may be, for example, 0.3 or more, 0.5 or more, 0.8 or more, or 1 or more. When the molar ratio is 1 or more, more sufficient adhesive strength tends to be obtained. The molar amount ratio of the decomplexing agent to the organoborane complex (molar amount of decomplexing agent/molar amount of organoborane complex) may be, for example, 50 or less, 30 or less, 10 or less, 7 or less, 5 or less, or 3 or less. As the molar amount ratio decreases, the working time from application of the adhesive composition to an adherend to pasting the adherend and another adherend together tends to be more sufficiently ensured.

### (Compound Having Radically Polymerizable Group)

At least one of the main agent and the initiator further contains a compound having a radically polymerizable group. The compound having a radically polymerizable group is a compound having a polymerizable group that radically reacts. Examples of the radically polymerizable group include a (meth)acryloyl group, a vinyl group, an allyl group, a styryl group, an alkenyl group, an alkenylene group, and a maleimide group.

As the compound having a radically polymerizable group, for example, a compound having a (meth)acryloyl group may be contained. Examples of the compound having a (meth)acryloyl group include a monofunctional (meth)acrylate having one (meth)acryloyl group, a polyfunctional (meth)acrylate having two or more (meth)acryloyl groups, and a (meth)acrylamide derivative. Among them, the compound having a (meth)acryloyl group may be a monofunctional (meth)acrylate having one (meth)acryloyl group.

Examples of the monofunctional (meth)acrylate include (meth)acrylic acid; alkyl (meth)acrylates having an alkyl group such as methyl (meth)acrylate, ethyl (meth)acrylate, n-butyl (meth)acrylate, isobutyl (meth)acrylate, tert-butyl (meth)acrylate, n-pentyl (meth)acrylate, n-hexyl (meth)acrylate, n-octyl (meth)acrylate, isooctyl (meth)acrylate, 2-ethylhexyl (meth)acrylate, isodecyl (meth)acrylate, dodecyl (meth)acrylate (n-lauryl (meth)acrylate), isomyristyl (meth)acrylate, stearyl (meth)acrylate, and isostearyl acrylate; alkenyl (meth)acrylates having an alkenyl group such as 3-butenyl (meth)acrylate; (meth)acrylates having an aromatic group such as benzyl (meth)acrylate and phenoxyethyl (meth)acrylate; alkoxy polyalkylene glycol (meth)acrylates such as methoxy tetraethylene glycol (meth)acrylate, methoxy hexaethylene glycol (meth)acrylate, methoxy octaethylene glycol (meth)acrylate, methoxy nonaethylene glycol (meth)acrylate, methoxy polyethylene glycol (meth)acrylate, methoxy heptapropylene glycol (meth)acrylate, ethoxy tetraethylene glycol (meth)acrylate, butoxy ethylene glycol (meth)acrylate, and butoxy diethylene glycol (meth)acrylate; (meth)acrylates having an alicyclic group such as cyclohexyl (meth)acrylate, isobornyl (meth)acrylate, and dicyclopentanyl (meth)acrylate; (meth)acrylates having a hydroxy group such as 2-hydroxyethyl (meth)acrylate, 3-hydroxypropyl (meth)acrylate, and 4-hydroxybutyl (meth)acrylate; (meth)acrylates having an amino group such as N,N-dimethylaminoethyl (meth)acrylate; (meth)acrylates having an isocyanate group such as 2-(2-methacryloyloxyethyloxy)ethyl isocyanate and 2-(meth)acryloyloxyethyl isocyanate; polyalkylene glycol mono(meth)acrylates such as tetraethylene glycol mono(meth)acrylate, hexaethylene glycol mono(meth)acrylate, octapropylene glycol mono(meth)acrylate, dipropylene glycol mono(meth)acrylate, tripropylene glycol mono(meth)acrylate, and octapropylene glycol mono(meth)acrylate; and (meth)acrylates having a siloxane skeleton. These may be used singly, or in combination of two or more kinds thereof.

Examples of the polyfunctional (meth)acrylate include aliphatic (meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, ethoxylated polypropylene glycol di(meth)acrylate, 1,3-butanediol di(meth)acrylate, 1,4-butanediol di(meth)acrylate, neopentyl glycol di(meth)acrylate, 3-methyl-1,5-pentanediol di(meth)acrylate, 1,6-hexanediol di(meth)acrylate, 2-butyl-2-ethyl-1,3-propanediol di(meth)acrylate, 1,9-nonanediol di(meth)acrylate, 1,10-decanediol di(meth)acrylate, glycerin di(meth)acrylate, tricyclodecanedimethanol (meth)acrylate, and ethoxylated 2-methyl-1,3-propanediol di(meth)acrylate; aromatic (meth)acrylates such as ethoxylated bisphenol A type di(meth)acrylate, propoxylated bisphenol A type di(meth)acrylate, ethoxylated propoxylated bisphenol A type di(meth)acrylate, ethoxylated bisphenol F type di(meth)acrylate, propoxylated bisphenol F type di(meth)acrylate, ethoxylated propoxylated bisphenol F type di(meth)acrylate, ethoxylated fluorene type di(meth)acrylate, propoxylated fluorene type di(meth)acrylate, and ethoxylated propoxylated fluorene type di(meth)acrylate; and aromatic epoxy (meth)acrylates such as bisphenol type epoxy (meth)acrylate, phenol novolac type epoxy (meth)acrylate, and cresol novolac type epoxy (meth)acrylate. These may be used singly, or in combination of two or more kinds thereof.

Examples of the (meth)acrylamide derivative include N,N-dimethylaminopropyl (meth)acrylamide, N,N-dimethyl (meth)acrylamide, N-isopropyl (meth)acrylamide, N,N-diethyl (meth)acrylamide, N-hydroxyethyl (meth)acrylamide, and 4-(meth)acryloylmorpholine. These may be used singly, or in combination of two or more kinds thereof.

As the compound having a radically polymerizable group, in addition to the compound having a (meth)acryloyl group, for example, a copolymerizable compound that is copolymerizable therewith may be contained. Examples of the copolymerizable compound include compounds having a radically polymerizable group other than a (meth)acryloyl group, such as styrene, 4-methylstyrene, vinylpyridine, vinylpyrrolidone, vinyl acetate, cyclohexylmaleimide, and phenylmaleimide.

The compound having a radically polymerizable group may be contained in at least one of the main agent and the initiator, and for example, the main agent may contain a compound having a radically polymerizable group.

The content of the compound having a radically polymerizable group may be 40% by mass or more, 50% by mass or more, 60% by mass or more, or 65% by mass or more based on the total amount of the main agent and the initiator from the viewpoints of improving the toughness and improving the adhesive strength of an adhesive layer. The content of the compound having a radically polymerizable group may be 99% by mass or less, 98% by mass or less, 95% by mass or less, 90% by mass or less, 85% by mass or less, or 80% by mass or less based on the total amount of the main agent and the initiator from the viewpoint of suppressing sagging of the applied adhesive composition and suppressing a decrease in toughness of an adhesive layer.

### (Polymerization Control Agent)

At least one of the main agent and the initiator further contains at least one selected from the group consisting of a metal halide salt and a compound having a thiocarbonyl thio structure as a polymerization control agent.

Examples of the metal halide salt include copper (II) bromide, copper (II) chloride, iron (III) bromide, vanadium (III) bromide, chromium (III) bromide, ruthenium (III) bromide, copper (I) bromide, iron (II) bromide, manganese (II) bromide, cobalt (II) bromide, nickel (II) bromide, and palladium (II) bromide. These may be used singly, or in combination of two or more kinds thereof. The metal halide salt may be, for example, copper (II) bromide.

The compound having a thiocarbonyl thio structure can be used without particular limitation as long as it has a thiocarbonyl thio structure, and for example, a chain transfer agent used in the field of Reversible Addition/Fragmentation Chain Transfer (RAFT) polymerization (i.e., RAFT agent) can be suitably used.

The polymerization control agent may be contained in at least one of the main agent and the initiator, and for example, the main agent may contain the polymerization control agent.

The content of the polymerization control agent may be 0.01% by mass or more, 0.02% by mass or more, 0.03% by mass or more, or 0.05% by mass or more based on the total amount of the main agent and the initiator from the viewpoints of ensuring working time from application of the adhesive composition to an adherend to pasting the adherend and another adherend together and improving the adhesive strength. The content of the polymerization control agent may be 5% by mass or less, 3% by mass or less, 1% by mass or less, 0.5% by mass or less, or 0.1% by mass or less based on the total amount of the main agent and the initiator from the viewpoint of storage stability of the main agent.

The content of the polymerization control agent may be 0.01 mol% or more, 0.03 mol% or more, 0.05 mol% or more, or 0.08 mol% or more based on the total amount of the compound having a radically polymerizable group from the viewpoints of ensuring working time from application of the adhesive composition to an adherend to pasting the adherend and another adherend together and improving the adhesive strength. The content of the polymerization control agent may be 5 mol% or less, 3 mol% or less, 1 mol% or less, 0.7 mol% or less, 0.5 mol% or less, or 0.2 mol% or less based on the total amount of the compound having a radically polymerizable group from the viewpoint of storage stability of the main agent.

### (Filler)

The filler may be, for example, either an inorganic filler or an organic filler. Examples of the inorganic filler include inorganic fine particles such as silica, alumina, silica-alumina, titania, zirconia, magnesia, kaolin, talc, calcium carbonate, bentonite, mica, sericite, glass flakes, glass fibers, graphite, magnesium hydroxide, aluminum hydroxide, antimony trioxide, barium sulfate, zinc borate, wollastonite, xonotlite, and whisker. When an inorganic filler is used as the filler, the inorganic filler may contain a silica filler.

Examples of the organic filler include organic fine particles such as silicone, acrylic silicone, acrylic rubber, MBS (methacrylate butadiene styrene), polyamide, and polyimide. These fillers (fine particles) may have a uniform structure, or may have a core-shell type structure. When an organic filler is used as the filler, the organic filler may contain acrylic core-shell particles.

The organic filler may contain an antioxidant in the organic filler. The content of the antioxidant in the organic filler may be, for example, 15000 ppm by mass or less, 10,000 ppm by mass or less, 5000 ppm by mass or less, or 3000 ppm by mass or less.

The filler may be contained in at least one of the main agent and the initiator. For example, the main agent may contain a filler containing an organic filler, and may contain a filler containing acrylic core-shell particles. In addition, for example, the initiator may contain a filler containing an inorganic filler, and may contain a filler containing a silica filler.

The content of the filler may be 1% by mass or more, 3% by mass or more, or 5% by mass or more, and may be 40% by mass or less, 35% by mass or less, or 30% by mass or less based on the total amount of the main agent and the initiator.

### (Plasticizer)

Examples of the plasticizer include phthalic acid ester-based compounds, alkyl sulfonic acid ester-based compounds, and adipic acid ester-based compounds.

The plasticizer may be contained in at least one of the main agent and the initiator.

The content of the plasticizer may be 0.1% by mass or more, 0.3% by mass or more, or 1.0% by mass or more, and may be 30% by mass or less, 20% by mass or less, or 10% by mass or less based on the total amount of the main agent and the initiator.

In addition to the above components, at least one of the main agent and the initiator may further contain, a crosslinking agent, an ultraviolet absorber, a dehydrating agent, a pigment, a dye, an anti-aging agent, an antioxidant, an antistatic agent, a flame retardant, an adhesionimparting agent, a dispersant, a solvent, and the like.

In the adhesive set of the present embodiment, by mixing the main agent and the initiator, an adhesive composition can be prepared. The temperature at which the main agent and the initiator are mixed may be, for example, 10 to 35°C. The pot life of the adhesive set may be, for example, 0.1 to 10 minutes.

When the main agent and the initiator are mixed, it is preferable to mix the main agent and the initiator such that the molar amount ratio of the decomplexing agent in the main agent to the organoborane complex in the initiator (molar amount of decomplexing agent/molar amount of organoborane complex) is 0.3 or more, 0.5 or more, 0.8 or more, or 1 or more, or 50 or less, 30 or less, 10 or less, 7 or less, 5 or less, or 3 or less.

When the main agent and the initiator are mixed, it is preferable to mix them such that the mass ratio of the main agent to the initiator (mass of main agent/mass of initiator) is, for example, 1 or more, 3 or more, or 5 or more, or 200 or less, 100 or less, or 50 or less.

The method of mixing the main agent and the initiator is not particularly limited as long as both are mixed together. Examples of the method of mixing the main agent and the initiator include a manual mixing method, a mixing method by hand painting using a normal caulking gun or the like, and a mixing method using a mechanical rotary mixer, a static mixer, or the like while concurrently using a quantitative pump (for example, a gear pump, a plunger pump, or the like) and a throttle valve for feeding raw materials. In addition, by using a dispenser, a hand gun, or the like having a mechanism in which the main agent and the initiator are separately disposed, fed to a nozzle or the like from each location, mixed inside the nozzle or the like, and discharged from the tip of the nozzle, mixing of the main agent and the initiator and application of the adhesive composition described later may be continuously performed.

The adhesive composition thus prepared can form an adhesive layer by applying the adhesive composition to a predetermined place. The formed adhesive layer acts as an adhesive layer for bonding the base materials to each other because the molecular weight of the compound having a radically polymerizable group gradually increases and the compound cures. As a method of applying it to a predetermined place, a conventionally known method such as a method using a dispenser or the like can be applied.

Conditions for curing the adhesive composition may be, for example, a curing temperature of 10 to 35°C and a curing time of 24 to 96 hours.

### [Bonded Body and Method for Producing the Same]

A bonded body according to one embodiment includes a first adherend, a second adherend, and an adhesive layer bonding the first adherend and the second adherend to each other. The adhesive layer contains a cured product of an adhesive composition containing the main agent and the initiator in the adhesive set.

Examples of the first adherend and the second adherend include plastic substrates such as polypropylene (PP), polyvinyl chloride, an acrylonitrile/butadiene/styrene copolymer (ABS), polycarbonate (PC), polyamide (PA), poly(methyl methacrylate) (PMMA), polyester, an epoxy resin, polyurethane (PUR), polyoxymethylene (POM), polyethylene (PE), an ethylene/propylene copolymer (EPM), and an ethylene/propylene/diene polymer (EPDM), and metal substrates such as aluminum, steel, copper, and stainless steel.

Examples of the bonded body include a plastic laminate substrate, a metal laminate substrate, an electronic component, a semiconductor component, and a display component.

A method for producing a bonded body according to an embodiment includes pasting a first adherend and a second adherend together with an adhesive composition containing a main agent and an initiator interposed between the first adherend and the second adherend. The temperature at the time of mixing the main agent and the initiator in the adhesive set, the conditions for curing the adhesive composition, and the like may be the same as those described above.

### Examples

Hereinafter, the present disclosure will be described more specifically with reference to examples. However, the present disclosure is not limited to these examples.

### <Examples 1-1 and 2-1 and Comparative Examples 1-1 to 1-3 and 2-1 to 2-3>

### [Production of Adhesive Set]

### (Preparation of Raw Material)

### ·Organoborane Complex

TEB-DAP: triethylborane-1,3-diaminopropane complex (molecular weight: 172.1, KISHIDA CHEMICAL Co., Ltd.)

### · Stabilizer

ACMO: 4-acryloylmorpholine (molecular weight: 141.2, KJ Chemicals Corporation)
DMAPAA: N-[3-(dimethylamino)propyl]acrylamide (molecular weight: 156.2, FUJIFILM Wako Pure Chemical Corporation)
Ace-MO: 4-acetylmorpholine (molecular weight: 129.2, Tokyo Chemical Industry Co., Ltd.)
Bu-MO: 4-isobutylmorpholine (molecular weight: 143.2, Tokyo Chemical Industry Co., Ltd.)

### · Decomplexing Agent

Maleic anhydride (molecular weight: 98.1, FUJIFILM Wako Pure Chemical Corporation)
Succinic anhydride (molecular weight: 100.1, FUJIFILM Wako Pure Chemical Corporation)
· Compound Having Radically Polymerizable Group (Polymerizable Compound)
FA-513AS: dicyclopentanyl acrylate (molecular weight: 206.3, Showa Denko Materials Co., Ltd.)
FA-310A: phenoxyethyl acrylate (molecular weight: 192.2, Showa Denko Materials Co., Ltd.)
DMAA: N,N-dimethylacrylamide (molecular weight: 99.1, FUJIFILM Wako Pure Chemical Corporation)

### ·Polymerization Control Agent

Copper (II) bromide (molecular weight: 223.4, FUJIFILM Wako Pure Chemical Corporation)

### ·Filler

RY200S: fumed silica (hydrophobic fumed silica surface-treated with silicone oil, NIPPON AEROSIL CO., LTD.)
M210: acrylic core-shell particles (KANEKA CORPORATION, no antioxidant detected)

### · Plasticizer

PN-5090: adipic acid polyester (ADEKA CORPORATION)

### (Preparation of Main Agent)

A decomplexing agent, a compound having a radically polymerizable group, a polymerization control agent, and a filler were weighed in a plastic bottle according to the types and ratios (unit: parts by mass) shown in Tables 1 and 2, using a rotation-revolution mixer (THINKY CORPORATION, Awatori Rentaro), mixed for 15 minutes under the condition of 2000 rpm, and further defoamed for 5 minutes under the condition of 2000 rpm to prepare each main agent in Examples 1-1 and 2-1 and Comparative Examples 1-1 to 1-3 and 2-1 to 2-3. The main agents in Example 1-1 and Comparative Examples 1-1 to 1-3 are the same, and the main agents in Example 2-1 and Comparative Examples 2-1 to 2-3 are the same.

### (Preparation of Initiator)

An organoborane complex, a stabilizer, a plasticizer, and a filler were weighed in a plastic bottle according to the types and ratios (unit: parts by mass) shown in Tables 1 and 2, using a rotation-revolution mixer (THINKY CORPORATION, Awatori Rentaro), mixed for 15 minutes under the condition of 2000 rpm, and further defoamed for 5 minutes under the condition of 2000 rpm to prepare each initiator in Examples 1-1 and 2-1 and Comparative Examples 1-1 to 1-3 and 2-1 to 2-3.

### [Measurement of Adhesive Strength]

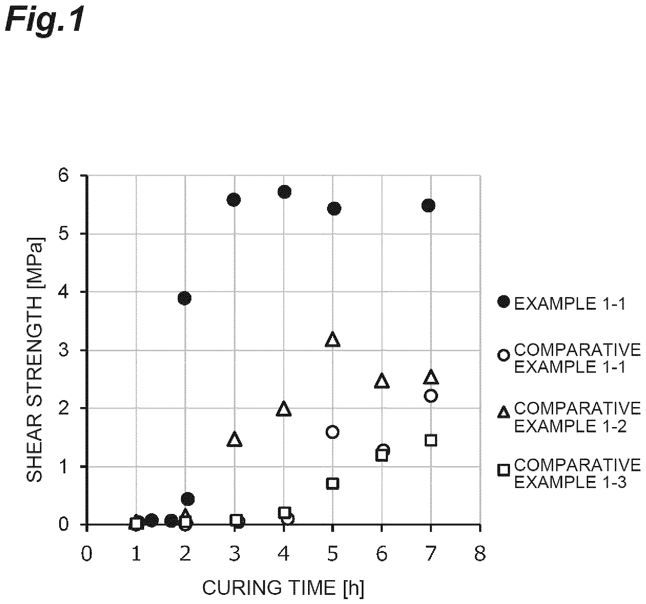

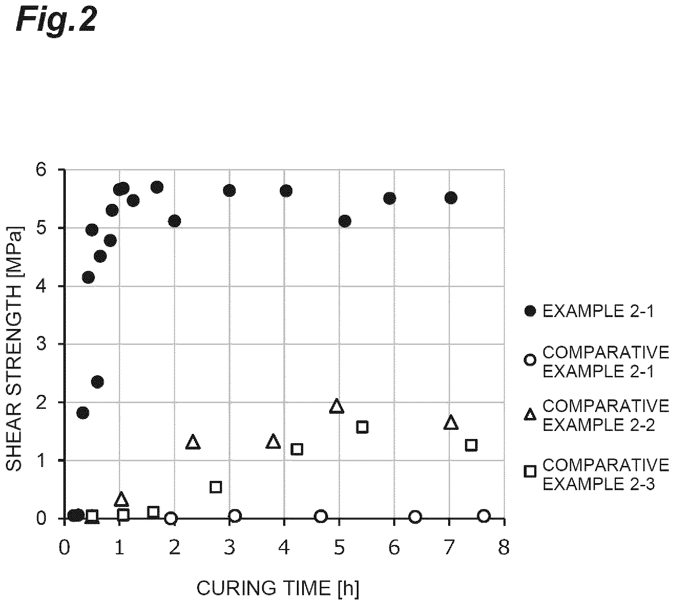

Two polypropylene substrates (size: 100 mm × 25 mm, thickness: 2 mm) were prepared. On one polypropylene substrate, a spacer having a thickness of 0.5 mm was disposed such that the application region of the adhesive composition had a thickness of 0.5 mm, a length of 12.5 mm in the longitudinal direction of the polypropylene substrate, and a length of 25 mm in the lateral direction of the polypropylene substrate. Each main agent and each initiator were filled in a manual dispenser such that the main agent and the initiator were mixed. Using the manual dispenser, the resulting mixture was applied to the adhesive application region of the polypropylene substrate on which the spacer was disposed, and then the polypropylene substrate and the other polypropylene substrate were pasted together to obtain a laminate. A plurality of laminates were produced. The obtained laminate was allowed to stand at 25°C, and the shear strength was measured every predetermined time to determine the change in shear strength with respect to the curing time. The shear test was performed at room temperature (25°C) using AUTOGRAPH (manufactured by SHIMADZU CORPORATION, model number: AGS X Plus, load cell: 50 kN) under the conditions of a distance between chucks of 100 mm and a tensile rate of 5 mm/min. The strength at break was measured, and the shear bond strength (MPa) was calculated from the measured value and the bonded area. The results are shown in FIGS. 1 and 2.

**Table 1**

| | | | Exam. 1-1 | Comp. Exam. 1-1 | Comp. Exam. 1-2 | Comp. Exam. 1-3 |
|---|---|---|---|---|---|---|
| Main agent | Decomplexing agent | Succinic anhydride | 0.35 | 0.35 | 0.35 | 0.35 |
| | Polymerizable compound | FA-513AS | 40.01 | 40.01 | 40.01 | 40.01 |
| | | FA-310A | 40.02 | 40.02 | 40.02 | 40.02 |
| | | DMAA | 0.49 | 0.49 | 0.49 | 0.49 |
| | Polymerization control agent | Copper (II) bromide | 0.09 | 0.09 | 0.09 | 0.09 |
| | Filler | M210 | 19.04 | 19.04 | 19.04 | 19.04 |
| Total amount of main agent | | | 100.00 | 100.00 | 100.00 | 100.00 |
| Initiator | Organoborane complex | TEB-DAP | 0.60 | 0.60 | 0.60 | 0.60 |
| | Stabilizer | ACMO | 1.11 | - | - | - |
| | | DMAPAA | - | 1.10 | - | - |
| | | Ace-MO | - | - | 1.10 | - |
| | | Bu-MO | - | - | - | 1.10 |
| | Plasticizer | PN-5090 | 7.93 | 7.94 | 7.93 | 7.93 |
| | Filler | RY200S | 0.36 | 0.36 | 0.37 | 0.37 |
| Total amount of initiator | | | 10.00 | 10.00 | 10.00 | 10.00 |
| Molar amount of decomplexing agent/molar amount of organoborane complex | | | 1.0 | 1.0 | 1.0 | 1.0 |
| Mass of main agent/mass of initiator | | | 10.0 | 10.0 | 10.0 | 10.0 |

**Table 2**

| | | | Exam. 2-1 | Comp. Exam. 2-1 | Comp. Exam. 2-2 | Comp. Exam. 2-3 |
|---|---|---|---|---|---|---|
| Main agent | Decomplexing agent | Maleic anhydride | 0.35 | 0.35 | 0.35 | 0.35 |
| | Polymerizable compound | FA-513AS | 40.03 | 40.03 | 40.03 | 40.03 |
| | | FA-310A | 40.02 | 40.02 | 40.02 | 40.02 |
| | | DMAA | 0.49 | 0.49 | 0.49 | 0.49 |
| | Polymerization control agent | Copper (II) bromide | 0.09 | 0.09 | 0.09 | 0.09 |
| | Filler | M210 | 19.02 | 19.02 | 19.02 | 19.02 |
| Total amount of main agent | | | 100.00 | 100.00 | 100.00 | 100.00 |
| Initiator | Organoborane complex | TEB-DAP | 0.60 | 0.60 | 0.60 | 0.60 |
| | Stabilizer | ACMO | 1.11 | - | - | - |
| | | DMAPAA | - | 1.10 | - | - |
| | | Ace-MO | - | - | 1.10 | - |
| | | Bu-MO | - | - | - | 1.10 |
| | Plasticizer | PN-5090 | 7.93 | 7.94 | 7.93 | 7.93 |
| | Filler | RY200S | 0.36 | 0.36 | 0.37 | 0.37 |
| Total amount of initiator | | | 10.00 | 10.00 | 10.00 | 10.00 |
| Molar amount of decomplexing agent/molar amount of organoborane complex | | | 1.0 | 1.0 | 1.0 | 1.0 |
| Mass of main agent/mass of initiator | | | 10.0 | 10.0 | 10.0 | 10.0 |

FIG. 1 is a graph showing changes in shear strength with respect to curing time in Example 1-1 and Comparative Examples 1-1 to 1-3. FIG. 2 is a graph showing changes in shear strength with respect to curing time in Example 2-1 and Comparative Examples 2-1 to 2-3. As shown in FIGS. 1 and 2, the adhesive compositions of the examples that contained (meth)acrylamide having a heterocyclic ring had shorter curing time than the adhesive compositions of the comparative examples that did not contain such a compound. From these results, it was confirmed that the adhesive set of the present disclosure allowed for preparation of an adhesive composition capable of sufficiently shortening the curing time.

## Claims

1. An adhesive set comprising:
a main agent comprising a decomplexing agent; and
an initiator comprising an organoborane complex and (meth)acrylamide having a heterocyclic ring, wherein
at least one of the main agent and the initiator further comprises a compound having a radically polymerizable group, and
at least one of the main agent and the initiator further comprises at least one selected from the group consisting of a metal halide salt and a compound having a thiocarbonyl thio structure.

2. The adhesive set according to claim 1, wherein the (meth)acrylamide having a heterocyclic ring is a compound represented by Formula (1): 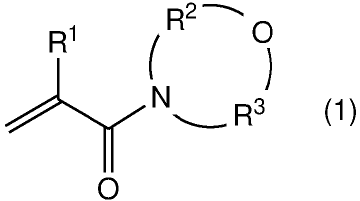
wherein R¹ represents a hydrogen atom or a methyl group, and
R² and R³ each independently represent an alkylene group.

3. The adhesive set according to claim 1 or 2, wherein the main agent further comprises a compound having a radically polymerizable group.

4. A bonded body comprising:
a first adherend;
a second adherend; and
an adhesive layer bonding the first adherend and the second adherend to each other, wherein
the adhesive layer comprises a cured product of an adhesive composition comprising the main agent and the initiator in the adhesive set according to claim 1 or 2.

5. A method for producing the bonded body according to claim 4, the method comprising:
pasting the first adherend and the second adherend together with an adhesive composition comprising the main agent and the initiator interposed between the first adherend and the second adherend.
